# EUROPÄISCHE PATENTSCHRIFT

(11) **EP 0 608 762 B1**
(45) Veröffentlichungstag und Bekanntmachung des Hinweises auf die Patenterteilung: **01.10.1997**
(21) Anmeldenummer: 94100714.8
(22) Anmeldetag: 19.01.1994
(51) Int. Cl.: G05B 13/02, G05B 19/05, G06F 7/60

(54) **Verfahren zur Einbindung unscharfer Logik in den Funktionsumfang standardisierter Automatisierungssysteme**
Method for integrating fuzzy logic in the field of functions of standard automation systems
Méthode pour intégrer la logique floue dans le champ des fonctions de systèmes standards d'automatisation

(30) Priorität: 23.01.1993 DE 4301752
(43) Veröffentlichungstag der Anmeldung: 03.08.1994
(73) Patentinhaber: Klöckner-Moeller GmbH, 53115 Bonn (DE)
(72) Erfinder: Dung, Olaf, Dipl.-Ing., D-53773 Hennef (DE); Högener, Hans-Jürgen, Dipl.-Ing., D-53859 Niederkassel (DE)

(56) Entgegenhaltungen:
- EP-A- 0 424 890
- EP-A- 0 464 393
- AUTOMATISIERUNGSTECHNISCHE PRAXIS - ATP, Bd.34, Nr.8, August 1992, MUNCHEN DE Seiten 451 - 460 H.-P. PREUSS & AL. 'FUZZY CONTROL- WERKZEUGUNTERSTÜTZTE FUNKTIONSBAUSTEIN-REALISIERUNG FÜR AUTOMATISIERUNGSGERÄTE UND PROZESSLEITSYSTEME'
- ENGINEERING AND AUTOMATION, Bd.XIV, Nr.6, 1992, BERLIN DE Seiten 10 - 11 H. WEGMANN 'FUZZY CONTROL WITH SIMATIC S5'
- CONTROL ENGINEERING, Bd.38, Nr.9, Juli 1991, NEW YORK US Seiten 28 - 30 N. INFELISE 'A CLEAR VISION OF FUZZY LOGIC'
- JEE JOURNAL OF ELECTRONIC ENGINEERING, Bd.29, Nr.310, Oktober 1992, TOKYO JP Seiten 46 - 50 M. NAKAMURA 'FUZZY LOGIC INFERENCE HELPS IN SEQUENTIAL CONTROL SYSTEMS'
- ELEKTRONIK, Bd.41, Nr.17, 18. August 1992, MUNCHEN DE Seiten 40 - 46 J. ROSSMAN 'DER REALISMUS KEHRT EIN'

## Beschreibung

Die Erfindung beschreibt ein Verfahren zur Einbindung unscharfer Logik in den Funktionsumfang standardisierter Automatisierungssysteme, insbesondere speicherprogrammierbare Steuerungen, nach dem Oberbegriff des Anspruchs 1.
Die Bearbeitung einer Steuerungs- und/oder Regelungsaufgabe wird nach der klassischen Methode nach genau definierter Logik -digital- durchgeführt. Demgegenüber arbeitet die FUZZY-Technologie mit unscharfen Begriffen der Umgangssprache. Insbesondere bei klassischen regelungstechnischen Aufgaben, die mittels Technologiebaugruppen in Speicherprogrammierbare Steuerungen (SPS) gelöst werden, bietet die Fuzzy-Technologie eine hervorragende Ergänzung zur Optimierung einer Regelaufgabe. Überall dort wo konventionelle Steuerungs- und Regelungssysteme durch Expertenwissen ergänzt werden müssen, findet Fuzzy-Technologie ein sinnvolles Einsatzgebiet. Bekannte Verfahren zur Einbindung unscharfer Logik in programmierbare Automatisierungssysteme mit digitalen Funktionssystemen nutzen eine Benutzeroberfläche in Fenster-Technik und mit Grafik-Symbolen auf einem als Programmiegerät ausgeführten und unter dem Betriebssystem MS-DOS lauffähigen Personal-Computer. Zur Einbindung unscharfer Logik (Fuzzy-Technologie), wird die bestehende Hardware mit einem speziellen Mikroprozessor, der die Eigenschaft aufweist, Fuzzy-Regeln besonders effizient abarbeiten zu können, ergänzt (z.B Fa. Omron, Mikroprozessor FP-3000 Digital Fuzzy Processor, Cat.No. ZC-009). Dieser Mikroprozessor befindet sich auf einem FUZZY-Inferenz Einsteckboard (FB-30AT oder FUZZY SPS-Modul C200H-FZ001, Liste "OMRON, FUZZY-Produkte für den Praktiker", Oktober 1992). Für die FUZZY Objektcode-Generierung zur Verarbeitung auf dem FP3000-Mikroprozessor wird eine spezielle FUZZY-Entwicklungssoftware benötigt, die zur Anwendung in einen speziellen Speicherbereich geladen wird.
Ein weiteres bekanntes Verfahren, die Integration einer Fuzzy-Logik in standardisierte Automatisierungssysteme zu erreichen, ist das von der Fa. Siemens entwickelte Fuzzy-Control-System (Fachzeitschrift "engineering&automation 14 (1992), Heft 5, Seite 12 und 13).
Für die genannten Verfahren sind zwei Mikroprozessoren notwendig. Ein Fuzzy-Prozessor bearbeitet die unscharfe Logik und ein SPS-Prozessor bearbeitet die digitale Logik. Beide Prozessoren arbeiten autark und tauschen Daten über getrennte Kommunikationswege und direkte Kopplung oder über ein gemeinsames Kommunikationselement (z.B.DUAL-PORT-RAM) aus. Die Arbeitsweise beider Prozessoren ist asynchron.

Aus dem Dokument "Automatisierungstechnische Praxis-ATP, Bd 34, Nr. 8. August 1992, München DE, Seiten 451-460 H.-P. Preuss & AL., Fuzzy Control-werkzeugunterstützte Funktionsbaustein-Realisierung für Automatisierungsgeräte und Prozeßleitebene" ist zwar ein Verfahren zur Einbindung unscharfer Logik eines standardisierten Automatisierungssystem eines unter Echtzeitbedingungen arbeitenden Systems unter Verwendung diskreter Fuzzy-Komponenten beschrieben, wobei zusätzliche Funktionsbausteine, sogenannte Grundbausteintypen, erforderlich sind. Die Funktionbausteine werden mit Hilfe des in der Schrift beschriebenen Fuzzy-Werkzeuges generiert und anschließend auf die Zielhardware übertragen. Nachteilig für den Anwender ist die Notwendigkeit eines zusätzlichen Fuzzy-Werkzeuges.

Das beschriebene unter Echtzeitbedingungen arbeitende System ist nicht in der Lage, schneller als z.B. 10 ms zu arbeiten, weil die Funktionsbausteine nicht hardwarenah angeordnet sind. Eine für diese Art von Steuerungen typische Anwendung sind langsame Prozesse, wie z.B. Temperatursteuerungen, die zwar unter Echtzeit ablaufen können, aber ein Echtzeit-Betriebsystem nicht benötigen.

Bei hochdynamischen Prozessen, wie Bewegungsabläufe in Kransteuerungen, müssen Echtzeitanforderungen im Bereich kleiner 10 ms erfüllt werden, was nur ein Echtzeit-Betriebssystem erreichen kann.

Bei dem in dem Dokument "Engineering & Automation, Bd. XIV, Nr.6, 1992, Berlin DE, Seiten 10, 11, H. Wegman, Fuzzy Control with Simatic S5" beschriebenen Verfahren ist auch ein zusätzliches Funktionspaket erforderlich und entspricht im wesentlichen dem oben vorgestellten Verfahren.

Die Erfindung stellt sich die Aufgabe, ein Verfahren zur Einbindung unscharfer Logik in den Funktionsumfang standardisierter Automatisierungssysteme, insbesondere speicherprogrammierbare Steuerungen mit einem Echtzeit-Betriebssystem zu schaffen, das eine zyklussynchrone Ausführung eines aus digitaler Logik und unscharfer Logik bestehenden Funktionssystems bewirkt und eine gleichzeitige synchrone Bearbeitung der digitalen und unscharfen Logik ermöglicht, ohne dafür die Hardware des Automatisierungssystems erweitern zu müssen, d.h. ohne zusätzliche Funktionsbausteine, und das die Handhabung des Fuzzy-Systems und des Digitalsystems mit einer Benutzeroberfläche über ein gemeinsamen Kommunikations-weg ermögiicht.

Die Aufgabe wird durch die kennzeichnenden Merkmale des Anspruches 1 gelöst.
In den Unteransprüchen 2 bis 7 sind vorteilhafte Weiterbildungen des erfindungsgemäßen Verfahrens angegeben.

Ein besonderer Vorteil des erfindungsgemäßen Verfahrens gegenüber dem Stand der Technik ist die Integration der FUZZY-Inferenzmaschine als zusätzlicher Prozeßblock. Die Inferenzmaschine ist eingelagert in den Zyklus der Prozeßabarbeitung eines Mikroprozessors. Dadurch wird auch die Verwaltung des Gesamtprozesses mit einer gemeinsamen Benutzeroberfläche erreicht. Das Mono-Prozessorsystem erzielt eine schnellere Abarbeitung der der FUZZY-Regeln, die innerhalb der Inferenzmaschine im Echtzeit-Betriebssystem eingelagert sind. Die Folge der schnelleren Abarbeitung ist ein optimiertes Regelverhalten, beispielsweise bei einer Temperaturregelung. Die Regelabweichungen sind gering, da die FUZZY-Regelung in der SPS online optimiert wird. Grenzwerte sind einer Regelaufgabe als sogenannte Zugehörigkeitsfunktionen zugeordnet und lagern in der Inferenzmaschine. Mit diesen Vorgaben kann der Regler bereits rudimentär arbeiten und wird dann aufgrund des in einer Wissensbasis vorgegebenen Expertenwissen permanent optimiert werden.

Im folgenden soll die Erfindung anhand eines Verfahrensbeispieles unter Bezugnahme auf die Zeichnung näher erläutert werden.

Es zeigen:
Fig.1 eine grafische Darstellung des Echtzeit-Betriebssystem mit der Zugriffsmöglichkeit des Benutzers über Personal-Computer nach dem erfindungsgemäßen Verfahren;
Fig.2 eine schematische Darstellung eines Programmzyklusses für eine Speicherprogrammierbare Steuerung (SPS), die nach dem erfindungsgemäßen Verfahren arbeitet;
Fig.3 ein Blockschaltbild zur Verdeutlichung des Standes der Technik und der schematischen Darstellung bekannter Verfahren;
Fig.4 ein Blockschaltbild zur Verdeutlichung der Vorteile des erfindungsgemäßen Verfahrens gegenüber den bekannten Verfahren nach Fig.3 und in
Fig.5 ein Zustandsfolgediagramm der Fuzzy-Inferenzmaschine unter Anwendung des erfindungsgemäßen Verfahrens.

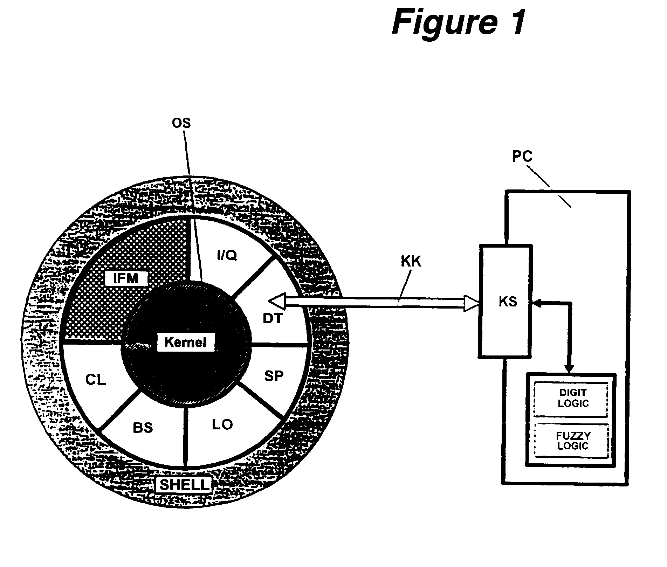

Die Fig.1 zeigt eine grafische Darstellung des Echtzeit-Betriebssystems mit der Zugriffsmöglichkeit des Benutzers über Personal-Computer nach dem erfindungsgemäßen Verfahren.
Eine Speicherprogrammierbare Steuerung (SPS) besitzt ein Betriebssystem BTS, das Hardware-Resourcen (physikalische Ein- und Ausgänge, Technologiebaugruppen ...) verwaltet und sie ladbaren Anwenderprogrammen zugänglich macht. Es verwaltet die Parameter-Instanzen, d.h. n-Parametersätze für eine programmierte Aufgabenstellung. Die klassische Aufgabe des SPS-Betriebssystems ist es, dem Anwenderprogramm physikalische Eingänge zyklussynchron zur Verfügung zu stellen und Ergebnisse als Ausgänge zyklussynchron abzuholen und an die Ausgangsperipherie weiterzuleiten. Das Anwenderprogramm wird mit einer auf einem Personal-Computer PC verwalteten Benutzeroberfläche erstellt, die sowohl digitale SPS-Programmierung (Programmierung nach Funktionsplan -FUP-, nach Kontaktplan -KOP- und Anweisungsliste -AWL-) wie auch die Erstellung von FUZZY-Regeln und Erstellung und Änderung von Parametern (symbolisch, linguistische Eingabe) unterstützt. Das Betriebssystem beinhaltet zusätzlich einen Fuzzyteil zur Anpassung an eine FUZZY-Inferenzmaschine IFM, die die SPS befähigt, FUZZY-Regeln optimal abarbeiten zu können. Dazu wurde die Erweiterung des Standard -Befehlsvorrates eines Mikroprozessors (z.B 80C166-Prozessor) genutzt, wodurch die in dem Betriebssystem BTS eingelagerte Inferenzmaschine betreibbar ist. Die Kommunikation zwischen Betriebssystem und Benutzeroberfläche wird über ein gesichertes Datenübertragungsprotokoll hergestellt. Dazu verbindet der Kommunikationskanal KK die Kommunikationsschnittstelle KS1 des Personal-Computers PC mit der physikalischen Schnittstellenanpassung DÜ des Betriebssystems BTS. Das Datenübertragungsprotokoll erlaubt die Durchführung der Standardfunktionalität der SPS, wie z.B. Online-Änderung, Start/Stopp, Statusanzeige, Zwangssetzen von Ein- und Ausgängen, Up- und Download von Applikationen und Operandenzustandserfassung. Diese Standadardfunktionalität wird der Benutzeroberfläche zugänglich gemacht.
Das Betriebssystem basiert auf einen Kern, der schalenförmig von unterschiedlichen Prozeßsteuerblöcken umgeben ist (Multitasking). Der Kern sorgt für das Echtzeitverhalten des Betriebssystems und sorgt für die Anpassungsfunktionen an die physikalischen Eigenschaften der Speicherprogrammierbaren Steuerung (SPS). Die den Kern umgebenen Prozessblöcke bewirken Anpassungsfunktionen an die physikalischen Eigenschaften der SPS-Funktionalität:
- DÜ =: Datenübertragungsschnittstelle
- CL =: Interne Uhr.
- SP =: Arbeitsspeicher, Datenspeicher und Anwenderspeicher.
- LO =: Loader. Steuerung der diversen Ladevorgänge, insbesondere der des anwenderspezifischen Funktionssystems.
- BS =: Physikalische Ein- und Ausgänge für Bedienschalter (RESET, START, RUN-LED usw.)
- I/Q=: Physikalische Ein- und Ausgänge der Peripherieebene,
- IFM =: Fussy-Inferenzmaschine

Der Personal-Computer PC weist einen beschreibbaren Speicherbereich SP auf, der dem Anwender zur Verfügung steht, um eine funktionsrelevante Steuerungs- und Regelungsaufgabe zu formulieren. Auf dieser gemeinsamen Hardware-Plattform sind SPS-Anwendungsprogramm und FUZZY-Inferenzmaschine unabhängig voneinander formulierbar, ladbar, starbar und online änderbar, indem SPS-Anwendungsprogramm und FUZZY-Inferenzmaschine IFM unter die gemeinsame funktionelle Verwaltung des Echtzeit-Betriebssystem BTS gestellt sind. Die SPS-Benutzeroberfläche ist ein systemorientiertes Softwarepaket, das durch grafische Unterstützung (Fenstertechnik) eine anwenderfreundliche Steuerungs- und Regelungsaufgabenformulierung bewirkt. Die Datenübertragung vom Personal-Computer PC zur Speicherprogrammierbaren Steuerung SPS erfolgt über die Kommunikationsschnittstelle KS und dem Kommunikationskanal KK zur Physikalischen Anpassung der Datenübertragungsschnittstelle DÜ des Betriebssystems BTS. Die SPS-Benutzeroberfläche verwaltet und organisiert die gesamte Datenkommunikation zwischen Personal-Computer PC und SPS. Dabei kann die Darstellung von Operandenzuständen im ersten Steuerungsteil ST1 und im zweiten Steuerungsteil ST2 zyklussynchron stattfinden. Darüberhinaus sind Diagnoseinformationen, z.B. aktueller Zykluszeitbedarf, Zustand der Inferenzmaschine IFM (GESTARTET, GESTOPPT ...), jederzeit über den Kommunikationskanal KK zum Personal-Computer PC abrufbar.

Die äußere Schale SHELL des Betriebssystems BTS bewirkt u.a. die Entgegennahme und Prüfung von Datenübertragungsinformationen an die Inferenzmaschine und/oder an die Steuerungsteile ST1, ST2. Sie bewirkt ferner die Auswertung von Handeingaben (RESET, START/STOP ...).

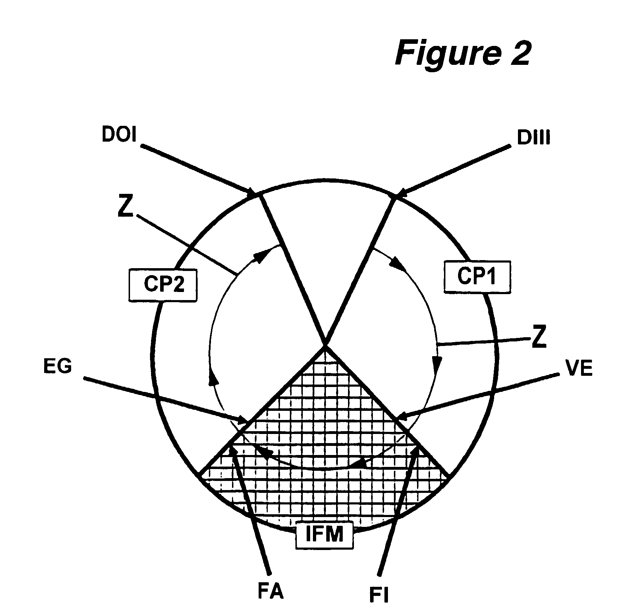

Die Fig. 2 zeigt eine schematische Darstellung eines Programmzyklusses für eine Speicherprogrammierbare Steuerung (SPS), die nach dem erfindungsgemäßen Verfahren arbeitet. Der Programmzyklus beginnt mit dem Einlesen der digitalisierten Eingangsinformation PEI, die von physikalischen Analogeingängen gebildet werden. Im ersten Steuerungsteil ST1 werden digitale logische Verknüpfungen durchgeführt, die vom Anwenderprogramm vorgegeben sind. Das Verknüpfungsergebniss VE wird der Inferenzmaschine IFM als FUZZY-Eingang FE zur Verfügung gestellt. Die Inferenzmaschine setzt den physikalischen Eingangswert auf eine linguistische Variable um (Fuzzyfizierung). Dann erfolgt die Bewertung und Berechnung der Information nach den Fuzzy-Regeln und Parametervorgaben, die der Inferenzmaschine über die Benutzeroberfläche vorgegeben wurden. Schließlich erfolgt die Umsetzung der berechneten linguistische Variable (Defuzzifizierung) auf einen Fuzzy-Ausgang FA, der dem zweiten Steuerungsteil ST2 als Eingangsgröße EG weitergeleitet wird. Der zweite Steuerungsteil ST2 bearbeitet die Information mit digitaler Logik und stellt sie der Ausgangspeipherie als periphere Ausgangsinformation PAI zur Verfügung. Über die Benutzeroberfläche ist es möglich, die Fuzzy-Inferenzmaschine IFM in Verbindung mit dem Echtzeit-Betriebssystem BTS in Echtzeit, d.h. im Millisekundenraster zeitlich determinierbar auszuführen. Nicht nur der Steuerungsteil ST1, der die Fuzzy-Eingänge FE liefert und die Ergebnis-Eingänge EG des zweiten Steuerungsteils ST2 sind online mittels die Benutzeroberfläche änderbar, sondern auch die Parameter, die das Regelverhalten der Inferenzmaschine IFM bestimmen, sind über Personal-Computer unter Zuhilfenahme von Bildschirm, Tastatur und Maus online änderbar.

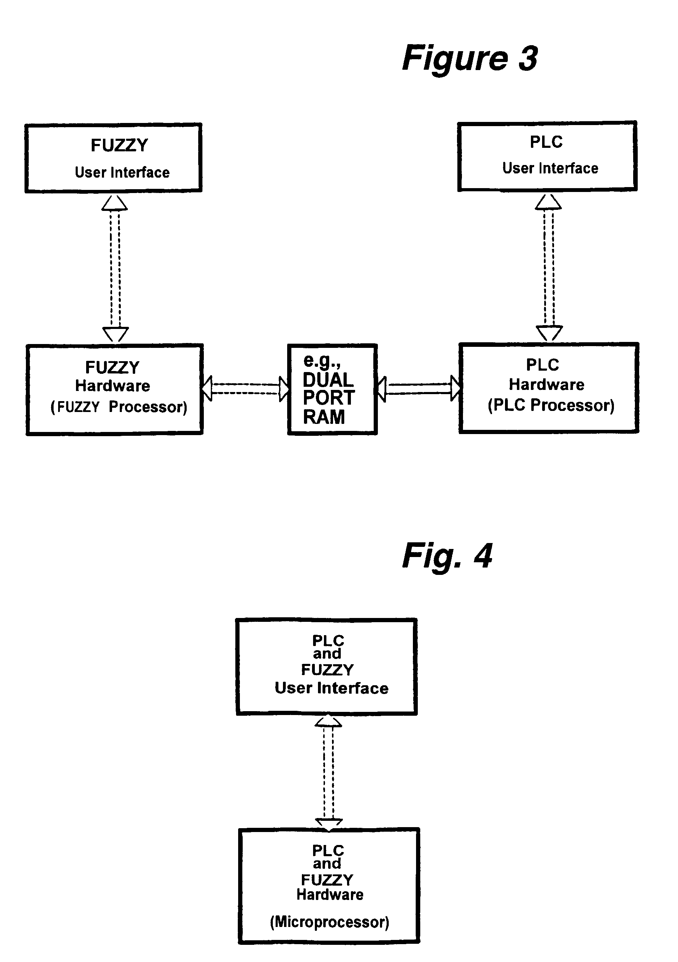

Die Fig.3 zeigt ein Blockschaltbild zur Verdeutlichung des Standes der Technik und der schematischen Darstellung bekannter Verfahren.
Dabei erfolgt eine Datenkommunikation zwischen FUZZY-Benutzeroberfläche und FUZZY-Hardware über ein eigens Bussystem. Ebenso erfolgt die Datenkommunikation zwischen SPS-Benutzeroberfläche und SPS-Hardware über ein eigenen Kommunikationskanal. Die Fuzzy-Hardware und die SPS-Hardware weisen jeweils einen separaten funktionsspezifischen Mikroprozessor auf, die untereinander über ein weiteres Bussystem Daten austauschen. Dieser Datenaustausch erfolgt über direkte Kopplung oder über ein Kommunikationselement, das in der Regel ein DUAL-PORTRAM ist.
Demgegenüber zeigt die Fig.4 ein Blockschaltbild zur Verdeutlichung der Vorteile des erfindungsgemäßen Verfahrens gegenüber den bekannten Verfahren nach Fig.3. SPS-System und FUZZY-System benutzen eine gemeinsame Benutzeroberfläche. SPS-Hardware und FUZZY-Hardware befinden sich auf einer gemeinsamen Hardware-Plattform.
Die Datenkübertragung zwischen Benutzeroberfläche und Hardware erfolgt über ein gemeinsamen Kommunikationskanal. Das FUZZY-System ist in die SPS- Umgebung vollständig integriert. Ein Mikroprozessor bearbeitet in einem Programmzyklus die digitale Steuerungsverknüpfung der scharfen SPS-Logik und die regelungstechnischen Verknüpfungen des FUZZY-Systems. Dies wurde unter Ausnutzung eines Standard-Mikroprozessors erreicht, dessen Befehlsvorrat mit speziellen FUZZY-Befehlen erweitert wurde. Die Fuzzy-Befehle werden von der im Betriebssystem BTS integrierten Inferenzmaschine IFM genutzt werden.

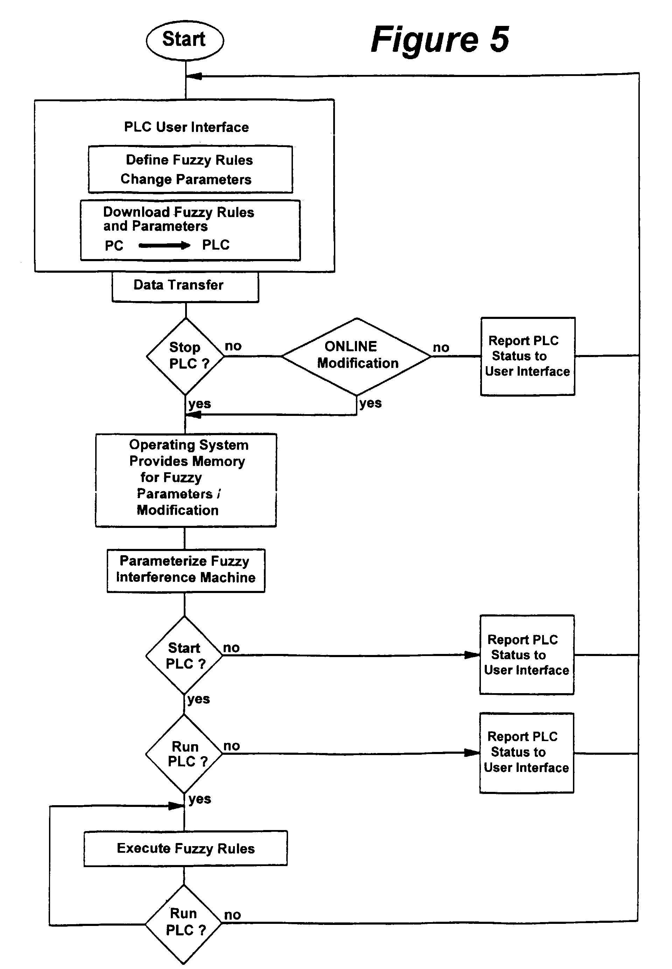

Die Fig.5 zeigt ein Zustandsfolgediagramm der Fuzzy-Inferenzmaschine unter Anwendung des erfindungsgemäßen Verfahrens.
Die Zustände der FUZZY-Inferenzmaschine lassen sich wie folgt charakterisieren:
1. Erzeugen der "Fuzzy-Task" als Prozeßsteuerblock des Betriebssystems BTS durch Befehl, der per Kommunikationskanal KK zur SPS übertragen wird;
   Zuordnen der physikalischen Ein- und Ausgänge zu den logischen Ein- und Ausgängen der "Fuzzy -Task", ebenfalls über Kommunikationskanal KK.
2. SPS-Status "Halt".
3. Start über Datenkommunikation oder Bedienelemente (Kippschalter, RESET-Taster)
4. Initial-Zustand.; Laden der Wissensbasis (Fuzzy-Regel, geänderte Parameter) online über Datenkommunikationskanal KK vom Personal-Computer PC zur SPS.
5. Fuzzy-Inferenzmaschine IFM wird zyklisch ausgeführt. Sie ist in zwei Steuerblöcke, erster Steuerteil ST1 und zweiter Steuerteil ST2, eingekleidet (s.Fig.2).

## Patentansprüche

1. Verfahren zur Einbindung unscharfer Logik in den Funktionsumfang standardisierter, eine Inferenzmaschine (IFM) aufweisende Automatisierungssysteme, insbesondere speicherprogrammierbare Steuerungen, die mittels eines auf einem Mikroprozessor ausgeführten Betriebssystems (BTS), das unter Echtzeitbedingungen abläuft, ein anwenderspezifisches Funktionssystem, welches in ein erstes Steuerungsteil (ST1) und in ein zweites Steuerungsteil (ST2) ladbar ist und der erste Steuerungsteil (ST1) und der zweite Steuerungsteil (ST2) und die Inferenzmaschine (IFM) unter die gemeinsame Verwaltung des Echtzeit-Betriebssystems (BTS) gestellt sind und regelungstechnische Funktionen, die in digitaler Logik ausgeführt sind, abarbeiten, wobei periphere Eingangsinformationen zyklisch erfasst, logisch verknüpft und Funktionsergebnisse an periphere Ausgänge zyklussysnchron weitergereicht werden und die in der Lage sind, physikalische Eingangsgrößen nach Fuzzy-Technologie zu bearbeiten und diese physikalischen Ausgangsgrößen zuzuordnen, wobei die Inferenzmaschine (IFM) mit dem ersten Steuerungsteil (ST1) und dem zweiten Steuerungsteil (ST2) verknüpfbar ist, indem der erste Steuerungsteil (ST1) die digitalisierten Eingangsinformationen (PEI) peripherer Analogeingänge abfragt, funktionslogisch verknüpft und mit Hilfe digitaler Verknüpfungsergebnisse oder direkt Fuzzy-Eingänge (FE) bildet und diese der Inferenzmaschine (IFM) zur Fuzzyfizierung, Verknüpfung und Bewertung zur Verfügung stellt, die Inferenzmaschine (IFM) die Defuzzyfizierung vornimmt und mit den Ergebnissen Fuzzy-Ausgänge (FA) bildet, die dem zweiten Steuerungsteil (ST2) als physikalische Eingangsgrößen (PE) bereitgestellt werden und der zweite Steuerungsteil (ST2) die physikalischen Eingangsgrößen (PE) bildet und als Ergebnisausgabe (PA) an die Ausgangsperipherie weiterreicht, und ferner eine Zugriffsmöglichkeit über einen Personal-Computer besteht, **dadurch gekennzeichnet, daß**
- die Inferenzmaschine (IFM) in das Betriebssystem (BTS) implementiert ist, wobei Fuzzy-Befehle von der im Betriebssystem (BTS) integrierten Inferenzmaschine (IFM) genutzt werden,
- das Betriebssystem (BTS) zusätzlich einen Fuzzyteil zur Anpassung an die Inferenzmaschine (IFM) aufweist,
- die Inferenzmaschine (IFM) als schalenförmig um das Betriebsystem (BTS) angeordneter Prozeßsteuerblock ausgebildet ist und eine Verfahrensstruktur mit parametrierbarer Fuzzy-Logik aufweist, und
- ein Standard-Mikroprozessor verwendet wird, dessen Standard-Befehlsvorrat mit speziellen Fuzzy-Befehlen erweitert wird derart, daß der standard-Mikroprozessor sowohl eine digitale Steuerungsverknüpfung einer SPS-Logik, als auch die regelungstechnischen Verknüpfungen eines Fuzzysystems verarbeitet, wobei unter Ausnutzung des erweiterten Standard-Befehlsvorrats mit regelspezifischen Fuzzy-Befehlen die im Betriebssystem (BTS) integrierte Inferenzmaschine (IFM) aktivierbar ist.

2. Verfahren nach Anspruch 1, **dadurch gekennzeichnet,** daß ein Programmzyklus (Z) mit Erfassen der peripheren Eingangsinformationen (PEI) durch den ersten Steuerungsteil (ST1) beginnt und mit Ergebnisausgabe (PAI) an die Ausgangsperipherie durch den zweiten Steuerungsteil (ST2) endet.

3. Verfahren nach den Ansprüchen 1 und 2, **dadurch gekennzeichnet, daß** die Inferenzmaschine (IFM) im Millisekundenraster zeitlich bestimmbar ausgeführt wird.

4. Verfahren nach den Ansprüchen 1 bis 3, **dadurch gekennzeichnet**, daß ein Personal-Computer (PC) als Programmiergerät vorhanden ist, der mit einer Schnittstelle (KS) und einem Kommunikationskanal (KK) mit einer in dem Betriebssystem (BTS) eingebundenen Kommunikationsschnittstelle (DÜ) gekoppelt ist.

5. Verfahren nach den Ansprüchen 1-4, **dadurch gekennzeichnet, daß** dem Anwender die Kommunikation mit dem programmierbaren Automatisierungsssystem über eine dem Personal-Computer (PC) implementierte Benutzeroberfläche in Fenstertechnik zugänglich gemacht wird.

6. Verfahren nach den Ansprüchen 1-5, **dadurch gekennzeichnet, daß** eine Darstellung von Operandenzuständen und Diagnoseinformationen im ersten Steuerungsteil (ST1) und im zweiten Steuerungsteil (ST2) zyklussynchron stattfinden und über den Kommunikationskanal (1) zum Personal-Computer (PC) abrufbar sind.

7. Verfahren nach den Ansprüchen 1 bis 6, **dadurch gekennzeichnet, daß** Zustandinformationen der Inferenzmaschine (IFM) über den Kommunikationskanal (1) zum Personal-Computer (PC) abrufbar sind.

## Claims

1. Process for the integration of fuzzy logic into the scope of functions of standardized automation systems presenting an interference machine (IFM), especially of programmable logic controls, which use an operating system (OS) that is performed on a microprocessor and that runs under real-time conditions, in order to run a user-specific functional system that can be loaded into a first control part (CP1) and into a second control part (CP2), and the first control part (CP1) and the second control part (CP2) and the interference machine (IFM) are placed under the common management of the real-time operating system (OS) and run control-technical functions which are performed in a digital logic, while peripheral input information is acquired cyclically, interconnected logically and functional results are passed on synchronously with the cycle to peripheral outputs, and which are able to process physical input quantities according to fuzzy technology and to assign these to physical output quantities, while the interference machine (IFM) can be interconnected with the first control part (CP1) and with the second control part (CP2) in such a way that the first control part (CP1) reads the digitalized input information (Dll) of peripheral analogue inputs, interconnects them according to functional logic, and forms fuzzy inputs (Fl) by means of digital interconnection results or directly, and provides these to the interference machine (IFM) for fuzzification, interconnection and evaluation, that the interference machine (IFM) does defuzzification and uses the results to form fuzzy outputs (FA) which are supplied as physical input quantities (PI) to the second control part (CP2), and the second control part (CP2) forms the physical input quantities (P1) and passes them as a result output (PO) to the output periphery, and that, furthermore, there is an access opportunity via a personal computer, characterized in that
- the interference machine (IFM) is implemented into the operating system (OS), while the fuzzy instructions are used by the interference machine (IFM) that is integrated into the operating system (OS);
- the operating system (OS) additionally presents a fuzzy part for adaptation to the interference machine (IFM);
- the interference machine (IFM) is designed as a process control block which is arranged in the form of a shell around the operating system (OS), and presents a process structure with a fuzzy logic which can be parameterized; and that
- a standard microprocessor is used, the standard instruction set of which is extended by special fuzzy instructions in such a way that the standard microprocessor processes both a digital control interconnection of a programmable logic control and the control-technical interconnections of a fuzzy system, while the interference machine (IFM), which is integrated into the operating system, can be activated by rule-specific fuzzy instructions, utilizing the extended standard instruction set.

2. Process as claimed in claim 1, characterized in that a programme cycle (Z) starts with the acquisition of the peripheral input information (PII) by the first control part (CP1), and ends with the result output (POI) to the output periphery by the second control part (CP2).

3. Process as claimed in claims 1 and 2, characterized in that the interference machine (IFM) is operated in a way that can be determined by time according to a grid of milliseconds.

4. Process as claimed in claims 1 through 3, characterized in that a personal computer (PC) is available as a programming device, and that it is coupled by means of an interface (Cl) and a communication channel (CC) to a communication interface (DT) integrated into the operating system (OS).

5. Process as claimed in claims 1 through 4, characterized in that the user is given access to communication with the programmable automation system via a user interface in windowing technology implemented into the personal computer (PC).

6. Process as claimed in claims 1 through 5, characterized in that a representation of operand statuses and diagnostic information is made synchronically with the cycle in the first control part (CP1) and in the second control part (CP2), and can be fetched via the communication channel (1) to the personal computer (PC).

7. Process as claimed in claims 1 through 6, characterized in that the status information of the interference machine (IFM) can be fetched via the communication channel (1) to the personal computer (PC).

## Revendications

1. Procédure pour l'intégration d'une logique floue dans le fonctionnement d'ensemble de systèmes d'automation standardisés présentant un mécanisme d'inférence (IFM), particulièrement commandes par programmes enregistrés, lesquelles prennent en charge des fonctions techniques de réglage exécutées en logique digitale, au moyen d'un système d'exploitation (SE) se déroulant en temps réel et exécuté par un microprocesseur, avec, placés sous l'administration commune du système d'exploitation en temps réel (SE): un système opératoire spécifique à l'utilisateur pouvant être chargé dans une première zone de commande (ZC1) et dans une deuxième zone de commande (ZC2), la première zone de commande (ZC1), la deuxième zone de commande (ZC2) elles-mêmes et le mécanisme d'inférence (IFM), des informations périphériques d'entrée étant saisies cycliquement, enchaînées logiquement et les résultats fonctionnels étant retransmis en synchronisme avec le cycle à des sorties périphériques, lesdites commandes par programmes enregistrés étant en mesure de traiter en technique de logique floue des grandeurs physiques d'entrée et de les affecter à des grandeurs physiques de sortie, le mécanisme d'inférence (IFM) étant enchaînable à la première zone de commande (ZC1) et à la seconde zone de commande (ZC2) cependant que la première zone de commande (ZC1) interroge les informations digitalisées d'entrée (IEP) d'entrées analogiques périphériques, les enchaîne en logique fonctionnelle et forme des entrées floues (EF) directement ou bien à l'aide de résultats digitaux d'enchaînement, mettant ces entrées à disposition du mécanisme d'inférence (IFM) pour conversion en logique floue, enchaînement et évaluation, et que le mécanisme d'inférence (IFM) procède à la déflouification et forme avec les résultats des sorties floues (SF) mises à la disposition de la seconde zone de commande (ZC2) en tant que grandeurs physiques d'entrée (EP), et que la seconde zone de commande (ZC2) forme les grandeurs physiques d'entrée (EP) et les retransmet comme sortie de résultats (SP) au périphérique de sortie, et que de plus existe une possibilité d'accès au moyen d'un ordinateur personnel, **caractérisée en ce que**
- le mécanisme d'inférence (IFM) est développé dans le système d'exploitation (SE), les instructions floues étant alors exploitées depuis le mécanisme d'inférence (IFM) intégré dans le système d'exploitation (SE),
- le système d'exploitation (SE) présente de plus une zone floue pour adaptation au mécanisme d'inférence (IFM),
- le mécanisme d'inférence (IFM) se présente sous forme de bloc de commande de processus disposé en coquille autour du système d'exploitation (SE) et présente une structure de programme à logique floue paramétrable, et
- en ce qu'un microprocesseur standard est employé, dont le jeu standard d'instructions est étendu à des instructions floues spécifiques, de sorte que le microprocesseur standard traite aussi bien un enchaînement digital d'une logique de commande par programme enregistré, que les enchaînements de réglage d'un système flou, le mécanisme d'inférence (IFM) intégré au système d'exploitation (SE) pouvant donc être activé en appliquant le jeu standard d'instructions étendu disposant d'instructions floues de réglage spécifiques.

2. Procédure selon revendication 1, **caractérisée en ce qu'**un cycle de programme (C) débute par saisie des informations d'entrée périphériques (IEP) par la première zone de commande (ZC1) et qu'elle est achevée par sortie de résultats (SPI) vers le périphérique de sortie par la seconde zone de commande (ZC2).

3. Procédure selon les revendications 1 et 2, **caractérisée en ce que** le mécanisme d'inférence (IFM) est exécuté en temps définissable par trame de millisecondes.

4. Procédure selon les revendications 1 à 3, **caractérisée en ce qu '**un ordinateur personnel (PC) est présent comme appareil de programmation, relié par une interface (lC) et un canal de communication (CC) à une interface de communication (UD) intégrée au système d'exploitation (SE).

5. Procédure selon les revendications 1-4, **caractérisée en ce que** la communication de l'utilisateur avec le système d'automation programmable est rendue adressable par un environnement d'utilisateur à fenêtrage mis en oeuvre par l'ordinateur personnel (PC).

6. Procédure selon les revendications 1-5, **caractérisée en ce qu'**une représentation des états d'opérande et des informations de diagnostic dans la première zone de commande (ZC1) et la seconde zone de commande (ZC2) est opérée en synchronisme avec le cycle, et est interrogeable par le canal de communication (1) vers l'ordinateur personnel (PC).

7. Procédure selon les revendications 1 à 6, **caractérisée en ce que** les informations d'état du mécanisme d'inférence (IFM) sont interrogeables par le canal de communication (1) vers l'ordinateur personnel (PC).
